(19) Europäisches Patentamt

European Patent Office

Office européen des brevets

(11) **EP 1 178 234 B1**

(12) **EUROPÄISCHE PATENTSCHRIFT**

(45) Veröffentlichungstag und Bekanntmachung des Hinweises auf die Patenterteilung:
**27.04.2005  Patentblatt 2005/17**

(51) Int Cl.⁷: **F16D 48/06**, F16D 27/00, F16D 13/04

(21) Anmeldenummer: **01115617.1**

(22) Anmeldetag: **03.07.2001**

(54) **Kupplungsanordnung**

Clutch arrangement

Système d'embrayage

(84) Benannte Vertragsstaaten:
**DE FR IT**

(30) Priorität: **05.08.2000  DE 10038334**

(43) Veröffentlichungstag der Anmeldung:
**06.02.2002  Patentblatt 2002/06**

(73) Patentinhaber: **ROBERT BOSCH GMBH**
**70442 Stuttgart (DE)**

(72) Erfinder:
• **Tumback, Stefan**
  **70469 Stuttgart (DE)**

• **Brehmer, Martin**
  **78464 Konstanz (DE)**
• **Hirschmann, Karl-Heinz, Prof.**
  **70195 Stuttgart (DE)**
• **Hasse, Steffen**
  **18119 Rostock (DE)**
• **Krautheim, Sven**
  **18069 Rostock (DE)**
• **Woernle, Christoph**
  **18119 Rostock (DE)**

(56) Entgegenhaltungen:
DE-C- 97 291               GB-A- 280 572
GB-A- 525 481             US-A- 4 645 049
US-A- 5 441 137

**Beschreibung**

Stand der Technik

Die vorliegende Erfindung betrifft eine Kupplungsanordnung zur Übertragung eines Drehmoments von einer Eingangswelle auf eine Ausgangswelle gemäß dem Oberbegriff des Patentanspruchs 1. Eine solche kupplungsanordnung ist aus DE-C-97291 bekannt.

Bei Fahrzeugen mit Schaltgetrieben erfolgt die Kraftübertragung vom Motor zum Getriebe beispielsweise über eine schaltbare Reibungskupplung. Diese Reibungskupplung ermöglicht es, den Kraftschluss während eines Gangwechsels zu unterbrechen. Bei Reibungskupplungen werden in der Regel zwei Scheiben zusammengedrückt, um über den Reibkontakt ein Drehmoment übertragen zu können. Die Steuerung des Drehmoments erfolgt z.B. über den Abstand der Kupplungsscheiben. Die Betätigung der Kupplung kann mechanisch, hydraulisch oder elektrohydraulisch erfolgen. Des Weiteren sind auch automatisierte Schaltgetriebe bekannt, welche z.B. elektrohydraulisch betätigt werden.

Beispielsweise ist aus der DE-197 29 997 eine Stelleinrichtung für eine Reibungskupplung bekannt, welche den bei Reibungskupplungen auftretenden Verschleiß kompensiert, ohne dass ein zusätzlicher Bauraum benötigt wird. Hierbei weist die Stelleinrichtung einen separaten Antrieb auf, der über eine Abtriebseinrichtung mit der Reibungskupplung in Wirkverbindung bringbar ist. Dabei ist die Abtriebseinrichtung mit einer Kompensationseinrichtung versehen, um eine verschleißbedingte Lageänderung der Anpressfeder der Reibungskupplung auszugleichen.

Aus der DE-41 33 962 ist ein Verstellantrieb in Form eines Planetengetriebes bekannt mit einem achsparallel dazu angeordneten elektrischen Gleichstrommotor. Die Welle des Gleichstrommotors ist direkt mit einem als Planetenrad ausgebildeten Antriebsrad verbunden. Das Planetengetriebe ist in zwei Ebenen ausgebildet und wird in der ersten Ebene durch das Antriebsrad zu einem Getriebe mit einer einem Planetengetriebe ähnlichen Wirkungsweise, da das Antriebsrad still steht und das Hohlrad und das Sonnenrad in zueinander entgegengesetzter Drehrichtung angetrieben werden. In der zweiten Ebene des Planetengetriebes bewirken Zähnezahl-Differenzen am Hohlrad bzw. am Sonnenrad zu den korrespondierenden Zähnezahlen der ersten Ebene eine entsprechend übersetzte Drehzahl am Planetenradträger. Hierbei ist es auch möglich, das Planetengetriebe mit einem Gewindetrieb zu verbinden, um kleine translatorische Bewegungen auszuführen.

Vorteile der Erfindung:

Die erfindungsgemäße Kupplungsanordnung mit den Merkmalen des Patentanspruchs 1 hat demgegenüber den Vorteil, dass sie eine Stelleinrichtung zum Einrücken und/oder Ausrücken der Kupplungselemente verwendet, wobei die Stelleinrichtung unmittelbar mit einer Antriebswelle verbunden ist und deren Rotationsenergie direkt zur Stellung der Kupplungselemente verwendet. Dadurch ist die zur Betätigung der Kupplungsanordnung notwendige Stellenergie für die Stelleinrichtung direkt aus dem Antriebsstrang bzw. der Antriebswelle entnehmbar. Mit anderen Worten muss für eine Betätigung der Kupplungsanordnung über die Stelleinrichtung die aus dem Antriebsstrang entnommene Energie nicht erst zum Antreiben eines Elektromotors, eines Elektromagneten oder eines Hydraulikzylinders wie im Stand der Technik verwendet werden, sondern die Energie des Antriebsstrangs wird direkt, d.h. ohne Umwandlung, der Stelleinrichtung zugeführt, um die Kupplungsanordnung zu betätigen. Somit sind erfindungsgemäß keine zusätzlichen Einrichtungen zum Antreiben der Stelleinrichtung notwendig. Dadurch ergeben sich erhebliche Kostenvorteile.

Erfindungsgemäß weist die Stelleinrichtung mindestens ein schrägverzahntes Zahnrad auf. Dadurch kann die Rotationsbewegung der Antriebswelle unmittelbar in eine translatorische Bewegung überführt werden. Besonders bevorzugt ist das Zahnrad dabei als schrägverzahntes Doppelplanetenrad ausgebildet. Dabei können die beiden Planetenräder, welche auf einer gemeinsamen Achse liegen eine unterschiedliche Zähnezahl aufweisen.

Gemäß einer besonders bevorzugten Ausgestaltung der vorliegenden Erfindung ist ein Planetengetriebe zwischen der Antriebswelle und der Stelleinrichtung angeordnet. Vorzugsweise ist das Planetengetriebe als Wolform-Planetengetriebe ausgebildet, bei dem zwei Planetengetriebe mit einem gemeinsamen Hohlrad nacheinander geschaltet sind.

Um eine leichtere und schnellere Rückstellung der Stelleinrichtung bei einem Außereingriffbringen bzw. Ausrücken der Kupplungselemente zu gewährleisten, weist die Stelleinrichtung vorzugsweise ein Federelement auf. Zusätzlich hat das Federelement die Aufgabe, dem Stellweg eine bestimmte Anpresskraft zuzuordnen.

Bevorzugt ist die Stelleinheit der Kupplungsanordnung als Bremse oder als Elektromotor ausgebildet. Die Bremse kann drehfest mit einem Sonnenrad des Planetengetriebes verbunden sein und kann beispielsweise als Wirbelstrombremse ausgebildet sein. Durch diese Bremse kann das Drehmoment am Sonnenrad bestimmt werden und dadurch das auf das Hohlrad des Planetengetriebes aufgebrachte Drehmoment bestimmt werden.

Besonders bevorzugt ist die erfindungsgemäße Kupplungsanordnung als Doppelkupplung ausgebildet. Bei Doppelkupplungen muss unter Last von einer auf die andere Kupplung umgeschaltet werden. Dies kann mit der erfindungsgemäßen Kupplungsanordnung ohne Zugkraftunterbrechung und ohne Verspannung des Getriebes erfolgen. Der Umkuppelvorgang von einer Kupplung auf die andere Kupplung kann somit nur durch eine momentenbasierte Ansteuerung der Kupplung erreicht werden, wodurch der Umkuppelvorgang wesentlich vereinfacht wird.

Vorteilhaft weist das Planetengetriebe einen Stelleingang auf, über den es mit der Stelleinheit verbunden ist. Durch den Stelleingang kann ein Sollwert für das zu übertragende Drehmoment durch Vorgeben eines Verdrehwinkels einer Kupplungsscheibe eingestellt werden.

Erfindungsgemäß wird somit insbesondere eine Stelleinrichtung bereitgestellt, welche die Rotationsenergie der Antriebswelle ohne Energieumwandlung unmittelbar zum Einrücken und/oder Ausrücken der Kupplungselemente verwendet. Dadurch kann auf aufwendige Antriebselemente zum Stellen der Kupplungselemente verzichtet werden. Weiter können dadurch Verlust infolge einer Energieumwandlung der Rotationsenergie in z.B. hydraulische Druckenergie vermieden werden. Dadurch kann der Gesamtwirkungsgrad des Kraftfahrzeugs erhöht werden. Somit kann eine besonders platzsparende Kupplungsanordnung bereitgestellt werden.

Zeichnung

Bevorzugte Ausführungsbeispiele der Erfindung sind in der Zeichnung dargestellt und werden in der nachfolgenden Beschreibung näher erläutert. Es zeigt:

Figur 1 eine Schnittansicht einer nicht erfindungsgemäßen Kupplungsanordnung im offenen Zustand;

Figur 2 eine Schnittansicht der in Figur 1 dargestellten Kupplungsanordnung im geschlossenen Zustand;

Figur 3 eine Schnittansicht einer nicht erfindungsgemäßen Kupplungsanordnung;

Figur 4 eine Schnittansicht einer nicht erfindungsgemäßen Kupplungsanordnung;

Figur 5 eine Schnittansicht einer nicht erfindungsgemäßen Kupplungsanordnung;

Figur 6 eine Schnittansicht einer in Figur 5 gezeigten Vorschubeinheit;

Figur 7 eine Seitenansicht der in Figur 5 gezeigten Vorschubeinheit in Ruhelage;

Figur 8 eine Seitenansicht der in Figur 5 gezeigten Vorschubeinheit während des Vorschubs;

Figur 9 eine schematische Darstellung des in Figur 5 gezeigten Planetengetriebes;

Figur 10 eine schematische Schnittansicht einer nicht erfindungsgemäß Kupplungsanordnung

Figur 11 eine schematische Darstellung des Leistungsflusses bei Kupplungsbetätigung der in Figur 10 dargestellten Kupplungsanordnung;

Figur 12 eine schematische Schnittdarstellung einer Kupplungsanordnung der in Fig. 10 dargestellten Kupplungsanordnung und

Figur 13 eine schematische Schnittdarstellung einer Kupplungsanordnung gemäß einem Ausführungsbeispiel der vorliegenden Erfindung.

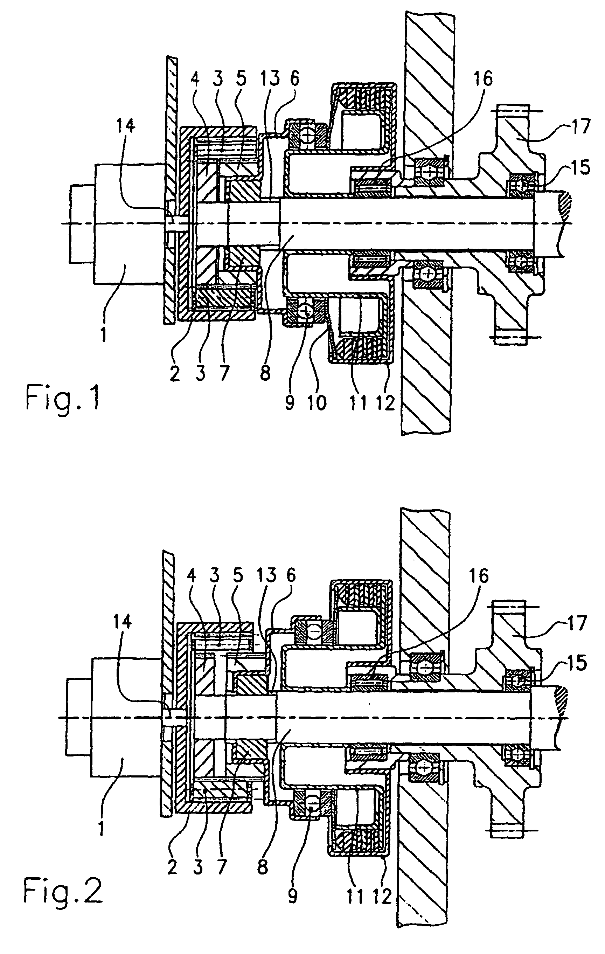

In den Figuren 1 und 2 ist eine Kupplungsanordnung dargestellt. Diese Kupplungsanordnung kann beispielsweise bei einem Doppelkupplungsgetriebe verwendet werden, bei dem der Kraftfluss abwechselnd über einen von zwei-Getriebezweigen geleitet wird.

Wie in Figur 1 gezeigt, umfasst die Kupplungsanordnung einen Elektromotor 1, welcher über eine Welle 14 mit einem Hohlrad 2 verbunden ist. Das Hohlrad 2 ist ein Teil eines Wolform-Planetengetriebes, welches weiter Planetenräder 3, ein erstes Sonnenrad 4, welches mit einer Vorgelegewelle 8 verbunden ist und ein zweites Sonnenrad 5, welches mit einer Druckglocke 6 verbunden ist, umfasst. Weiter ist die Druckglocke 6 mit einer Gewindemutter 7 sowie einem Drucklager 9 verbunden.

Die Vorgelegewelle 8 weist mehrere abgestufte Wellenbereiche auf, wobei an einem Wellenbereich ein Gewinde 13 vorgesehen ist, in welches die Gewindemutter 7 eingreift.

Wie insbesondere aus Figur 1 ersichtlich, befindet sich das Drucklager 9 über ein Federelement 10, wie z.B.

eine Blattfeder, mit einem äußeren Lamellenträger 12 in Verbindung. Der äußere Lamellenträger 12 ist über ein Lager 16 drehbar zur Vorgelegewelle 8 gelagert. Weiter ist ein innerer Lamellenträger 11 vorgesehen, welcher mit der Vorgelegewelle 8 fest verbunden ist. Der äußere Lamellenträger 12 ist mit einem Abtriebszahnrad 17 verbunden, welches mit Getriebezahnrädern (nicht dargestellt) kämmt. Die beiden Lamellenträger 11 und 12 weisen jeweils mehrere Lamellen mit daran befestigten Reibbelägen in bekannter Weise auf.

In Figur 1 ist die Kupplungsanordnung im offenen Zustand gezeigt, d.h. es wird kein Drehmoment vom inneren Lamellenträger 11 auf den äußeren Lamellenträger 12 übertragen. Figur 2 zeigt die Kupplungsanordnung im geschlossenen Zustand, in welchem ein Drehmoment über die Lamellenträger 11, 12 übertragen wird. Im ruhenden Zustand, d.h. in einem Zustand, in welchem die Kupplung keine translatorischen Bewegungen ausführt (d.h. die Kupplung befindet sich beispielsweise im eingerückten oder ausgerückten Zustand), drehen sich das Zahnrad 4, das Zahnrad 5, die Druckglocke 6 sowie der innere Lamellenträger 11 mit der gleichen Drehzahl wie die Vorgelegewelle 8. Sollte es durch Beschleunigungen oder Verzögerungen der Vorgelegewelle 8 infolge der Trägheit des Motorläufers zu einer unerwünschten Relativdrehung der Teile 4, 5, 6 und des Motors 1 kommen, wird diese Relativverdrehung durch ein Messsystem erfasst und vom Motor kompensiert.

Nachfolgend wird der Schließvorgang bzw. der Öffnungsvorgang der Kupplung beschrieben. Wenn die Kupplung geschlossen bzw. geöffnet werden soll, muss die Druckglocke 6 translatorisch in Richtung der Achse der Welle 8 bewegt werden, um die Lamellen des inneren und des äußeren Lamellenträgers 11, 12 zu belasten bzw. zu entlasten. Diese translatorische Bewegung wird durch eine Drehzahldifferenz zwischen der Welle 14 des Elektromotors 1 und der Vorgelegewelle 8 bewirkt. Wie schon erläutert wurde, dreht sich die Welle 14 des Elektromotors 1 über das Planetengetriebe durch die Antriebskraft der Vorgelegewelle 8. Um die Kupplung zu öffnen bzw. zu schließen, wird daher die Welle 14 des Elektromotors über den Elektromotor 1 verzögert, wodurch sich auch die Drehzahl des Hohlrades 2 verringert. Da die beiden Sonnenräder 4 und 5 eine unterschiedliche Zähnezahl aufweisen, vorzugsweise um einen Zahn, werden die beiden Sonnenräder 4, 5 über die Planetenräder 3 gegeneinander verdreht. Da das Sonnenrad 5 mit der Druckglocke 6 und der Spindelmutter 7 verbunden ist, bewirkt diese Verdrehung der beiden Zahnräder zueinander eine translatorische Bewegung dieser Teile relativ zur Vorgelegewelle 8. Dadurch verschiebt die Druckglocke 6 über das Drucklager 9 und das Federelement 10 die Lamellen der Kupplung in Axialrichtung und bewirkt somit das Schließen bzw. das Öffnen der Kupplung. Durch das Federelement 10 wird eine zusätzliche Kraftübersetzung erreicht.

Da die Welle 14 des Elektromotors durch die Kraft der Vorgelegewelle 8 angetrieben wird und der Stellvorgang der Kupplung durch eine Verzögerung der Welle 14 erreicht wird, wird die Stellenergie direkt der Welle 8 entnommen, da der Verstellvorgang über die Mutter 7 infolge der Drehung der Vorgelegewelle 8 und des Planetengetriebes erreicht wird. Weiterhin vorteilhaft ist, dass die zum Andrücken der Kupplungslamellen benötigte Kraft nicht von außen abgestützt werden muss, da der Kraftfluss geschlossen in der Kupplung verläuft. Es ist lediglich die Abstützung des Reaktionsmoments am Motor erforderlich.

Die Gesamtübersetzung (rotatorisch-translatorisch) setzt sich aus den einzelnen Übersetzungen des Wolformgetriebes und der Steigung des Bewegungsgewindes 13 zusammen. Somit hat man zwei Möglichkeiten, die Gesamtübersetzung zu beeinflussen. Um den Wirkungsgrad zu verbessern und somit die Motorbaugröße zu verkleinern, wählt man die Steigung des Bewegungsgewindes groß, was dessen Wirkungsgrad erhöht. Die damit sinkende Gesamtübersetzung gleicht man mit einer Erhöhung der Wolformgetriebeübersetzung aus. Die Getriebeübersetzungserhöhung wirkt sich nur gering auf den Wirkungsgrad aus. Weiter bewirkt der Verzicht auf eine Krafterhöhung mit Reibelementen (wie z.B. gleitende Kugeln auf einer konischen Fläche) eine weitere Verbesserung des Wirkungsgrads.

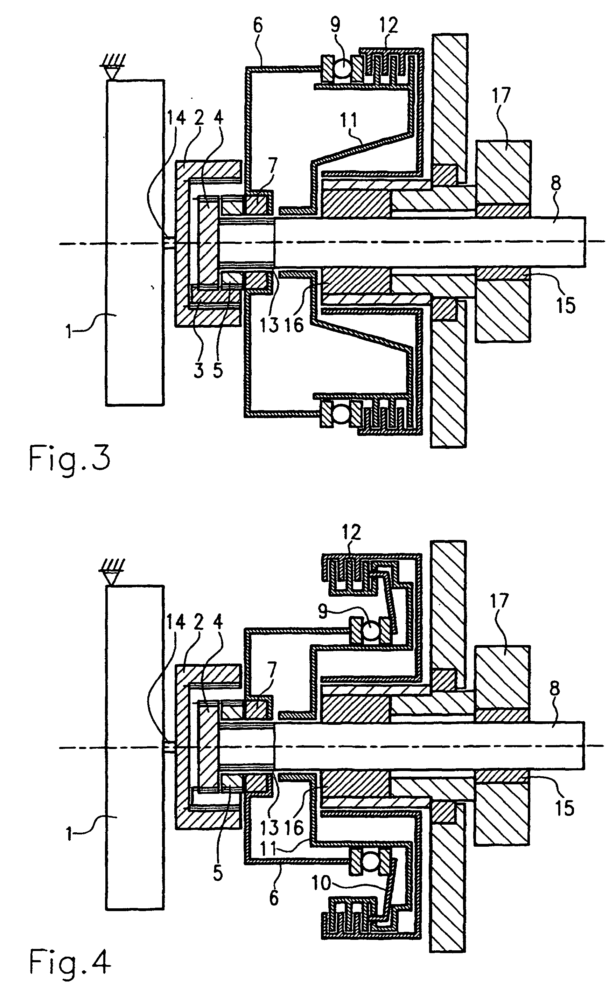

In Figur 3 ist eine zweite Kupplungsanordnung dargestellt. Gleiche bzw. ähnliche Teile sind mit den gleichen Bezugszeichen wie im ersten Ausführungsbeispiel bezeichnet. Daher wird nachfolgend nur eine detaillierte Beschreibung von Teilen gegeben, welche anders als im ersten Ausführungsbeispiel ausgestaltet sind.

Im Gegensatz zur Kupplungsanordnung des ersten Beispiels ist bei der Kupplungsanordnung des zweiten Beispiels kein Federelement vorhanden. Wie in Figur 3 gezeigt, wird die translatorische Bewegung der Druckglocke 6 direkt über das Drucklager 9 auf die Lamellen der Lamellenträger 11, 12 übertragen bzw. die Lamellen außer Eingriff gebracht. Somit weist die Kupplungsanordnung gemäß dem zweiten Ausführungsbeispiel eine geringere Anzahl von Bauteilen auf. Es muss auf die im ersten Beispiel bereitgestellte Kraftübersetzung des Federelements verzichtet werden.

In Figur 4 ist eine Kupplungsanordnung gemäß einem dritten Beispiel dargestellt. Gleiche bzw. ähnliche Teile sind mit den gleichen Bezugszeichen wie im vorher beschriebenen Beispiel bezeichnet. Da das dritte Beispiel im Wesentlichen dem ersten Beispiel entspricht, werden nachfolgend nur Unterschiede im Detail erläutert.

Wie in Figur 4 gezeigt, weist die Kupplungsanordnung gemäß dem dritten Beispiel wieder ein Federelement 10 auf. Das Federelement 10 ist derart angeordnet, dass es über einen vorstehenden Bereich des inneren Lamellenträgers 11 eine Hebelwirkung auf die Lamellen der Lamellenträger 11, 12 ausüben kann. Dabei ist das Federelement innenliegend angeordnet, sodass die Gefahr von Beschädigung und/oder Beschmutzung verringert ist und die Kupplungsanordnung eine sehr kompakte Bauweise aufweist.

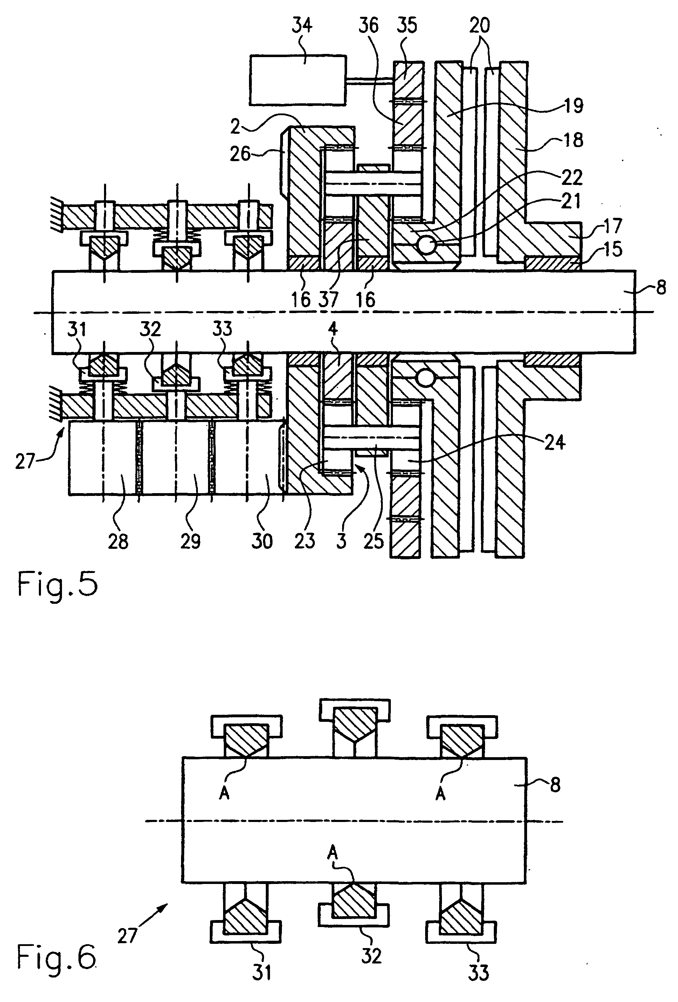

In den Figuren 5 bis 9 ist eine Kupplungsanordnung gemäß einem vierten Beispiel der vorliegenden Erfindung dargestellt. Gleiche bzw. ähnliche Teile sind mit den gleichen Bezugszeichen wie in den vorhergehenden Beispielen bezeichnet.

Wie in Figur 5 gezeigt, umfasst die Kupplungsanordnung gemäß dem vierten Beispiel eine Antriebswelle 8 und eine über ein Lager 15 auf der Antriebswelle 8 gelagerte Abtriebswelle 17. Weiter umfasst die Kupplungsanordnung eine erste Kupplungsscheibe 18 sowie eine zweite Kupplungsscheibe 19, welche jeweils mit Reibbelägen 20 versehen sind und in einer einander gegenüberliegenden Position angeordnet sind (vgl. Figur 5). Die erste Kupplungsscheibe 18 ist mit der Abtriebswelle 17 verbunden und die zweite Kupplungsscheibe 19 ist über eine Drehfeder 21 mit der Antriebswelle 8 verbunden. Zur Verbindung der Elemente 18 und 19 wäre auch eine Lamellenkupplung einsetzbar.

Des Weiteren weist die zweite Kupplungsscheibe 19 einen mit einer Aussenverzahnung ausgebildeten Flanschbereich 22 auf, welcher sich von der ersten Kupplungsscheibe 18 fort erstreckt.

Weiter ist ein Planetengetriebe an der Seite der zweiten Kupplungsscheibe 19 angeordnet. Das Planetengetriebe umfasst ein Hohlrad 2, ein Sonnenrad 4 sowie ein Doppelplanetenrad 3. Das Doppelplanetenrad 3 besteht aus einem ersten Planetenrad 23, einem zweiten Planetenrad 24 und einer die beiden Planetenräder verbindenden Welle 25. Die beiden Planetenräder 23 und 24 weisen dabei eine gleiche Zähnezahl auf. Somit weist die Kupplung ein Planetengetriebe nach Wolform auf, wobei der Flanschbereich 22 ebenfalls als Sonnenrad dient.

Wie in Figur 5 gezeigt, ist das Hohlrad 2 als Kronrad ausgebildet, welches eine Verzahnung 26 an seiner Außenseite aufweist.

Weiter weist die Kupplungsanordnung gemäß dem vierten Beispiel eine Vorschubeinheit 27 auf. Die Vorschubeinheit 27 umfasst drei Zahnräder 28, 29, 30 sowie einen ersten Laufring 31, einen zweiten Laufring 32 und einen dritten Laufring 33. Wie in Figur 5 gezeigt, sind die drei Zahnräder 28, 29, 30 mit dem als Hohlrad ausgebildeten Kronrad 2 im Eingriff. Jeweils ein Zahnrad 28, 29, 30 ist mit jeweils einem Laufring 31, 32, 33 fest über eine Welle verbunden, wobei die Wellen jeweils am äußeren Umfang der Laufringe 31, 32, 33 befestigt sind und als Drehachse der Zahnräder 28, 29, 30 dienen. Durch diese Anordnung ist es möglich, dass sich die Laufringe 31, 32, 33 infolge einer Drehung der Zahnräder 28, 29, 30 um die Achse der Zahnräder drehen können.

In Figur 6 sind die drei Laufringe 31, 32, 33 in einer vergrößerten Schnittdarstellung gezeigt. Dabei ist ersichtlich, dass der erste Laufring 31 und der dritte Laufring 33 an einem oberen Bereich der Welle 8 ihren Anlagepunkt A mit der Welle 8 haben. Der zweite Laufring 32, welcher in der Mitte der beiden Laufringe 31 und 33 angeordnet ist, weist einen Auflagepunkt A an der unteren Seite der Welle 8 auf.

Um die Höhe des mit der Kupplung zu übertragenden Drehmoments einzustellen, ist weiter als Stelleinheit ein separater Stellantrieb 34 vorgesehen (vgl. Fig. 5), welcher über Zahnräder 35, 36 mit dem zweiten Planentenrad 24 verbunden ist. Das Doppelplanetenrad 23, 24 ist über eine mittels eines Lager 16 gelagerten Lochscheibe 37 auf der Antriebswelle 8 gelagert.

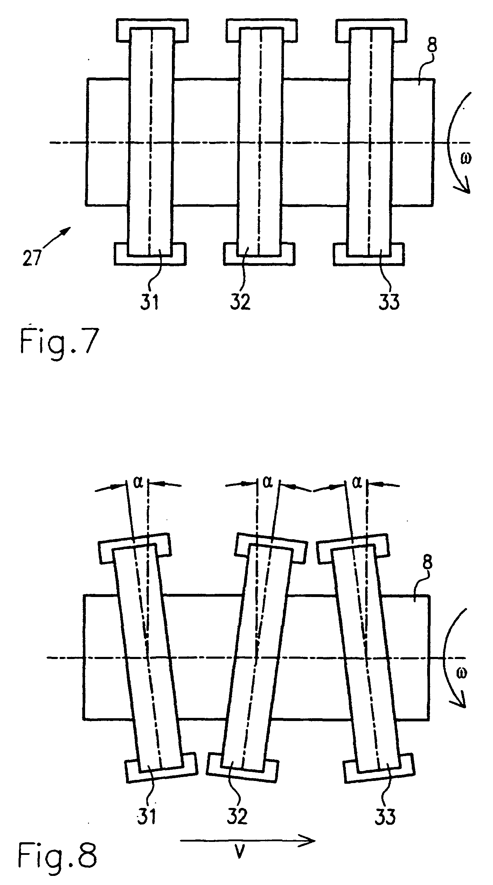

Nachfolgend wird die Betriebsweise der Kupplung gemäß dem vierten Beispiel beschrieben. Wie in Figur 7 gezeigt, ist die Vorschubeinheit 27, welche im Wesentlichen aus den drei Laufringen 31, 32 und 33 besteht, derart angeordnet, dass die Antriebswelle 8 in den Laufringen rotatorisch gelagert ist. Wenn nun die Laufringe 31, 32, 33 aus der Ruhelage um einen Winkel verstellt werden (vgl. Figur 8), ist die Tangentialgeschwindigkeit am Berührpunkt A zwischen den Laufringen 31, 32, 33 und der Welle 8 nicht mehr senkrecht zur Wellenachse. Unter der Voraussetzung kinematischer Kontaktverhältnisse ergibt sich also die Vorschubgeschwindigkeit

$$v = \omega \cdot r \cdot \tan\,,$$

wobei $\omega$ die Drehgeschwindigkeit der Welle 8, r der Radius der Welle 8 und der Neigungswinkel der Laufringe 31, 32, 33 aus der Ruhelage ist. Somit ist durch eine Veränderung des Winkels die Vorschubgeschwindigkeit stufenlos regelbar.

Ein Maß für das übertragene Drehmoment ist der Verdrehwinkel von Antriebswelle und der zweiten Kupplungsscheibe 19. Hierbei ist die zweite Kupplungsscheibe 19 axial verschiebbar über die lineare Drehfeder 21 mit der Antriebswelle 8 verbunden. Die axiale Position der ersten Kupplungsscheibe 18 wird durch die Vorschubeinheit 27 bestimmt.

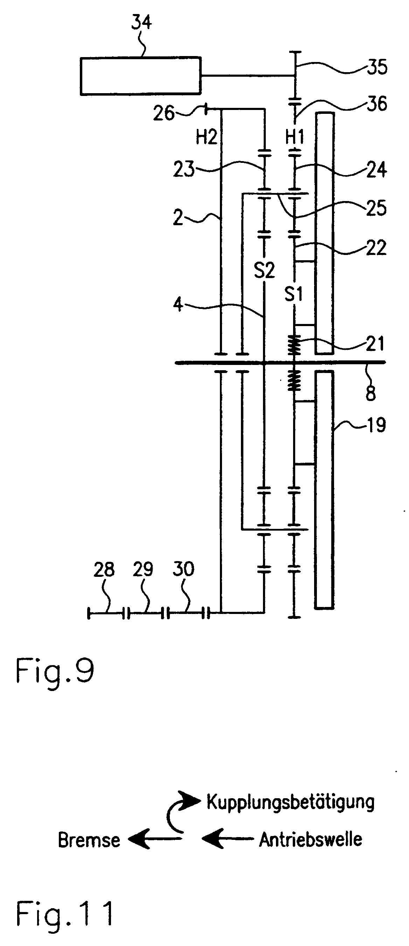

Der Verdrehwinkel von Antriebswelle 8 und Kupplungsscheibe 19 wird über das Planetengetriebe nach Wolform (Figur 9) ausgekoppelt und das als Kronrad ausgebildete Hohlrad 2 auf die Zahnräder 28, 29, 30 zur Verstellung der im Raum drehfest angeordneten, axial beweglichen Vorschubeinheit 27 übertragen. Über diese Zahnräder 28, 29, 30 wird somit der Neigungswinkel a der Laufringe 31, 32, 33 und somit letztlich die Vorschubgeschwindigkeit eingestellt.

Wenn nun über den Stellantrieb 34 ein bestimmter Sollwert an Drehmoment zur Übertragung vorgegeben wird, erfolgt die Verstellung über das Zahnrad 36, welches als erstes Hohlrad H1 des Wolformgetriebes ausgebildet ist (vgl. Figur 9), auf die Planetenräder 23 und 24, welche die gleiche Zähnezahl aufweisen. Wenn sich die Sonnenräder 4 und 22 mit der gleichen Geschwindigkeit drehen, drehen sich auch das erste Hohlrad H1 und das zweite Hohlrad H2 mit der gleichen Geschwindigkeit. Das zweite Hohlrad H2 verstellt sich also nicht relativ zum ersten Hohlrad H1, sondern nur relativ zum feststehenden Gehäuse, wodurch die Zahnräder 28, 29, 30 gedreht werden und damit der Neigungswinkel $\alpha$ der Laufringe 31, 32, 33 eingestellt wird. Da die Laufringe 31, 32, 33 ortsfest gelagert sind, bewegt sich entsprechend dem Neigungswinkel $\alpha$ die Antriebswelle 8 und dadurch auch die Kupplungsscheibe 19, welche über die Torsionsfeder 21 mit der Antriebswelle 8 verbunden ist, in axialer Richtung. Somit wird die Stellenergie zum Einrücken/Ausrücken der Kupplung direkt aus der Antriebswelle 8 übernommen. Der Stellantrieb 34 dient hierbei nur zur Einstellung eines vorgegebenen Sollwerts für das zu übertragende Drehmoment. Zur Verstellung der Kupplung wird keine Energie aus dem Stellantrieb 34 verwendet.

Im Einzelnen gelten für das in Figur 9 dargestellte Räderschema des Wolformgetriebes die folgenden Zusammenhänge:

Verdrehwinkel von Hohlrad H2 zu einer

| Ausgangsstellung | $\varphi_{H2} = \Delta\varphi_F / i_0 + \varphi_{H1}$ |
| Vorschubgeschwindigkeit | $V \approx \omega \cdot r \cdot \alpha = \omega \cdot r \cdot i_v \cdot \varphi_{H2}$ |
| Kupplungsmoment | $M_{Ku} = c_{Torsionsfeder} \cdot \Delta\varphi_F$ |

wobei

$\Delta\varphi_F$    der relative Verdrehwinkel der Sonnenräder 4 und 22 gegeneinander,

$i_0$    die Standübersetzung des Planetengetriebes, d.h. das Verhältnis Zähnezahl Hohlrad zu Zähnezahl Sonne,

$i_v$    $= \alpha / \varphi_{H2,}$ und

c    Stetigkeit der Torsionsfeder (Federkonstante) ist.

Für die Ruhelage des Systems gilt: v = 0

Das Kupplungsmoment ist dann also $M_{Ku,Soll} = -c_{Torsionsfeder} \cdot i_0 \cdot \varphi_{H1}$

Abweichungen werden vom System über den Regelmechanismus ausgeglichen. Die Vorschubgeschwindigkeit wird dabei wie folgt durch eine Abweichung vom Sollwert eingestellt:

$$v = (M_{Ku,ist} - M_{ku,Soll}) \cdot \omega \cdot r \cdot i_v / c_{Torsionsfeder} \cdot i_0$$

Somit weist die erfindungsgemäße Anordnung gemäß dem vierten Beispiel also das Verhalten eines mechanischen P-Reglers auf.

Um auftretende Schwingungen im System zu vermeiden, ist eine Dämpfung der Torsionsfeder vorzusehen. Dazu kann ein Reibelement zwischen der Kupplungsscheibe 19 und der Antriebswelle 8 eingesetzt werden. In einer einfachen Ausführung kann dies bereits die Lagerung dieser zwei Teile sein, die ansonsten nur durch die Torsionsfeder 21 verbunden sind.

Somit stellt die Kupplungsanordnung gemäß dem vierten Beispiel einen rein mechanischen Regler für das Drehmoment dar. Die Regelung erfordert keine zusätzliche Steuerelektronik. Die Stellenergie wird nicht aus einem Aktor sondern unmittelbar aus der Antriebswelle 8 entnommen. Der Stellaktor 34 kann daher klein und mit hoher Dynamik realisiert werden. Bei einer Verwendung der Kupplung in einem Kraftfahrzeug wird die Stellleistung für die Kupplung vom Verbrennungsmotor aufgebracht.

Durch die Regelung des übertragenen Drehmoments kann vorteilhaft insbesondere eine verbesserte Steuerung des Anfahrvorgangs, welche äußeren Einflüssen nur in geringem Maße unterliegt, erreicht werden. Dadurch ergibt sich für den Fahrer ein beträchtlicher Komfortgewinn. Eine weitere Verwendung ist beispielsweise in einem Doppelkupplungsgetriebe, bei dem unter Last von einer auf die andere Kupplung umgeschaltet werden muss. Dies sollte ohne Zugkraftunterbrechung und ohne Verspannung des Getriebes erfolgen. Der Umkuppelvorgang kann durch eine momentenbasierte Ansteuerung der Kupplung wesentlich vereinfacht werden. Somit stellt die Kupplung gemäß dem vierten Ausführungsbeispiel direkt das übertragene Drehmoment und nicht den Abstand zwischen den Kupplungsscheiben ein, was im Stand der Technik anhand der Kupplungskennlinie, welche den Zusammenhang zwischen Abstand der Kupplungsscheiben und Drehmoment beschreibt, der Fall ist.

Weiterhin bietet die Kupplungsanordnung gemäß dem vierten Beispiel die Möglichkeit eines Ausgleichs bei Abweichungen des Drehmoments von einem zu übertragenden Solldrehmoment. Wenn über die Kupplung, beispielsweise ein großes Drehmoment übertragen wird, welches von dem durch den Stellantrieb vorgegeben Solldrehmoments abweicht, wird das Sonnenrad S1 (22) relativ zum Sonnenrad S2 (4) verdreht (vgl. Figur 9). Dadurch wird auch die Welle 25, welche die beiden Planetenräder 23 und 24 trägt, im gleichen Umfang verdreht. Da das zweite Sonnenrad 4 keine Verdrehung ausführen kann, wird die Verdrehung des ersten Sonnenrads 2 über die beiden Planetenräder 23 und 24 auf das zweite Hohlrad 2 übertragen, wodurch die drei Zahnräder 28, 29, 30 und somit die Laufringe 31, 32 und 33 verstellt werden. Dadurch wird die Welle 8 axial bewegt, so dass durch diese Bewegung der Welle 8 das vom Solldrehmoment abweichende Drehmoment kompensiert wird, da die beiden Kupplungsscheiben voneinander entfernt werden. Somit kann eine Abweichung von einem vorgegebenen Solldrehmoment automatisch durch die Kupplungsanordnung kompensiert werden. Es sei angemerkt, dass die relative Drehung des ersten Sonnenrades 22 zum zweiten Sonnenrad 4 deshalb möglich ist, da das erste Sonnenrad 22 an der Antriebswelle 8 mittels der Drehfeder 21 gelagert ist, wodurch Relativverdrehungen zwischen dem ersten Sonnenrad 22 und der Antriebswelle 8 möglich sind. Hierbei ist die vorliegende Erfindung nicht auf die Drehfeder 21 beschränkt. Beispielsweise kann als elastisches Element zwischen der Antriebswelle 8 und dem ersten Sonnenrad 22 auch eine Bogenfeder oder ein elastischer Ring aus Kautschuk, welcher an Anschlägen anliegt, die an der Antriebswelle 8 bzw. dem Sonnenrad 22 gebildet sind, ausgeführt sein. Somit werden die Laufringe 31, 32, 33 der Vorschubeinheit 27 durch eine relative Verdrehung von Antriebswelle 8 und Kupplungselement 19 verstellt.

Gemäß dem vierten Beispiel wird somit die Anpressung der Kupplungselemente 18, 19 und damit das übertragene Drehmoment entsprechend einem Sollwert durch ein mechanisches Getriebe eingeregelt. Dabei ist der Sollwert für das übertragbare Drehmoment durch einen als Stellantrieb 34 ausgebildeten Aktor einstellbar.

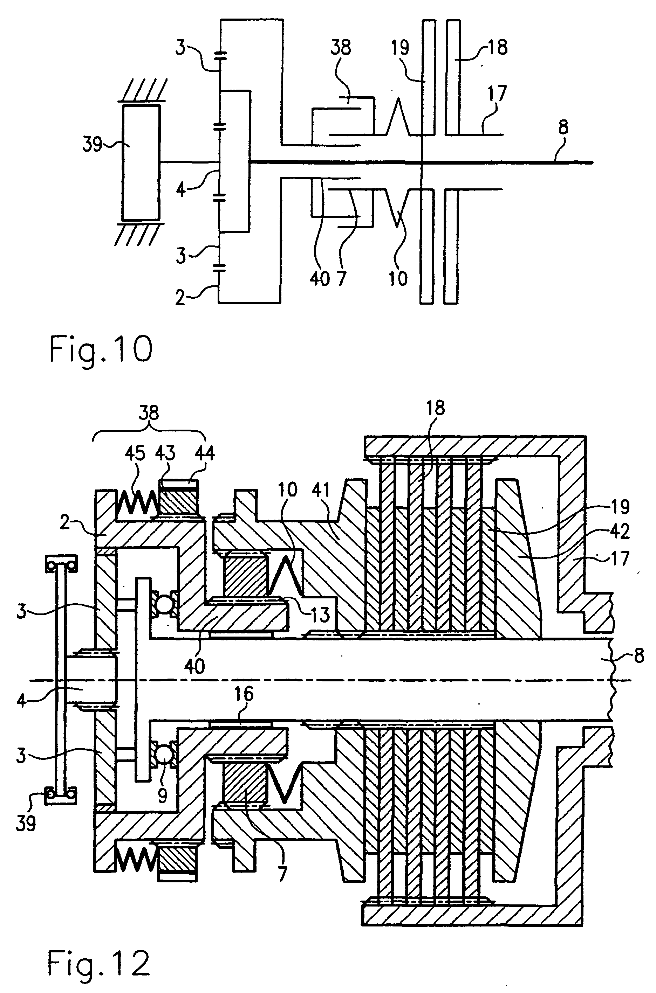

In den Figuren 10 bis 12 ist eine Kupplung gemäß einem fünften Beispiel dargestellt. Gleiche bzw. ähnliche Teile sind wieder mit den gleichen Bezugszeichen wie in den vorangehenden Beispielen bezeichnet.

In Figur 10 ist der prinzipielle Aufbau der Kupplung gemäß dem fünften Beispiel dargestellt. Die Kupplung umfasst eine Antriebswelle 8, welche drehfest mit einer Kupplungsscheibe 19 verbunden ist. Weiter ist eine Abtriebswelle 17 vorgesehen, welche drehfest mit einer Kupplungsscheibe 18 verbunden ist.

Weiter ist ein Planetengetriebe vorgesehen, welches aus einem Sonnenrad 4, mehreren Planeten 3 und einem Hohlrad 2 besteht. Eine Spindel 40 ist fest mit dem Hohlrad 2 verbunden. Die Spindel 40 weist ein Außengewinde auf, auf welcher eine Gewindemutter 7 angeordnet ist. Eine Kupplung 38 ist vorgesehen, um die Spindel 40 und die Gewindemutter 7 miteinander zu kuppeln bzw. zu entkuppeln. Weiter ist zwischen der Gewindemutter 7 und der Kupplungsscheibe 19 ein Federelement 10 vorgesehen.

Die Wellen der Planetenräder 3 befinden sich mit der Antriebswelle 8 in Verbindung. Das Sonnenrad 4 ist drehfest mit einer Bremseinrichtung 39 verbunden (vgl. Figur 10).

In Figur 11 ist nochmals schematisch das Prinzip der Kupplung dargestellt. Die zur Kupplungsbetätigung notwendige Stellenergie wird direkt bzw. unmittelbar aus dem Antriebsstrang entnommen, ohne dass eine Wandlung der Energie des Antriebsstrangs z.B. in einem Elektromotor, einem Elektromagnet oder einem Hydrauliksystem notwendig ist. Die Kupplung des fünften Beispiels eignet sich insbesondere für automatisierte Kupplungen in Antriebssträngen von Kraftfahrzeugen. Dadurch ist die Kupplung wichtiger Bestandteil eines elektronischen Kupplungsmanagements oder eines automatisierten Schaltgetriebes.

Insbesondere ist auch die Anwendung in einem Doppelkupplungsgetriebe vorteilhaft, bei welchem zwei Kupplungen vorgesehen sind und beim Schaltvorgang des Getriebes und Last von einer auf die andere Kupplung umgeschaltet wird. Dies kann ohne Zugkraftunterbrechung und ohne Verspannung des Getriebes erfolgen. Die Kupplung muss dabei eine hohe Dynamik und gut regelbar sein, was durch die in dem fünften Beispiel dargestellte Kupplung besonders gut erfüllt wird. Somit ist es möglich, die Kupplung kleiner als im Stand der Technik zu dimensionieren. Ein separater Antrieb für den Kupplungsaktor ist nicht notwendig. Weiter erfolgt die Einstellung des Kupplungsmoments nicht mehr wie bisher auf der Basis des Kupplungsweges sondern auf der Basis der Anpresskraft der Kupplungselemente. Somit ergeben sich kurze Stellzeiten sowie eine gute Regelbarkeit des von der Kupplung übertragenen Drehmoments.

Die Funktion der in Figur 10 und 12 dargestellten Kupplung ist wie folgt: In einem Ruhezustand der Kupplung, d.h. in einem Zustand, in welchem sich die Kupplung in einer definierten Position befindet, wird die Spannkraft für die Kupplungsscheiben 18, 19 vom Federelement 10 aufrechterhalten. Die Kupplung 38 verhindert eine Bewegung der Spindel 40 und damit ein Abfallen der Kraft.

Für eine Betätigung der Kupplung wird die Kupplung 38 gelöst. Um eine Anpresskraft aufbauen zu können, muss ein Drehmoment auf das Hohlrad 2 des Planetengetriebes aufgebracht werden. Das Drehmoment wird dann über die Spindel 40 und die Gewindemutter 7 in eine axiale Kraft übersetzt und wirkt auf die Kupplungsscheibe 19. Das Drehmoment, welches auf das Hohlrad 2 des Planetengetriebes aufgebracht wird, wird durch das Drehmoment am Sonnenrad 4 bestimmt. Da das Sonnenrad 4 fest mit einer Bremseinrichtung 39 verbunden ist, lässt sich das Drehmoment über die Bremseinrichtung 39 einstellen. Die Drehmomente am Hohlrad 2 und am Sonnenrad 4 wirken über die Planetenräder 3 zurück auf die Antriebswelle 8, sodass auch hier ein Drehmoment aufgebracht wird. Da das gesamte System rotiert, stellt sich der in Figur 11 gezeigte Leistungsfluss ein.

Eine Anpresskraft an den Kupplungsscheiben 18, 19 wird in der dargestellten Anordnung durch die Standübersetzung $i_0$ des Planetengetriebes, die Steigung s der Spindel und das Drehmoment M der Bremseinrichtung 39 bestimmt. Hierbei ist die Anpresskraft

$$F = i_o/s \cdot M$$

Ist nun die aktuelle Anpresskraft F kleiner als die dem Drehmoment M entsprechende, so schließt sich die Kupplung. Wenn die Anpresskraft F größer als die dem Drehmoment M entsprechende ist, öffnet sich die Kupplung. Hierzu ist es notwendig, dass die Spindel 40 und die Gewindemutter 7 keine Selbsthemmung aufweisen. Die Kraft zum Öffnen der Kupplung wird durch die Feder 12 aufgebracht sowie durch ein nicht dargestelltes Federelement zum Trennen der Kupplungsscheiben 18 und 19.

In Figur 12 ist die Kupplung gemäß dem fünften Beispiel im Detail dargestellt. Die Kupplung ist als eine Nasslamellenkupplung ausgebildet, wobei die Reiblamellen 19 drehfest mit der Antriebswelle 8 verbunden sind und die Reiblamellen 18 drehfest mit der Abtriebsseite 17 verbunden sind. Die axiale Spannkraft zwischen den Reiblamellen 18, 19 wird über Spannbacken 41, 42 aufgebracht. Die Spannbacken 41 und 42 sind drehfest mit der Antriebswelle 8 verbunden. Die Übertragung der Stellkraft erfolgt von der Spindel 40, welche mittels eines Nadellagers 16 auf der Antriebswelle 8 gelagert ist, über die Gewindemutter 7 und die Feder 10. Hierbei ist die Gewindemutter 7 drehfest mit der Spannbacke 41 verbunden. Der Kraftschluss wird über das Axiallager 9 geschlossen. Der Kraftfluss verläuft damit vollständig im rotierenden System.

Das Stellmoment auf die Spindel 40 wird über das Planetengetriebe eingeleitet. Genauer wird das Stellmoment auf die Spindel über das Hohlrad 2 eingeleitet. Das Hohlrad 2 ist drehfest mit der Spindel 40 verbunden. Im dargestellten Ausführungsbeispiel sind das Hohlrad 2 und die Spindel 40 einstückig ausgebildet. Es ist jedoch auch denkbar, dass sie als zwei separate Elemente gebildet sind. Auf der Außenseite der Spindel 40 ist ein Außengewinde 13 vorgesehen, auf welchem die Mutter 7 sich axial bewegen kann. Weiter umfasst das Planetengetriebe Planeten 3 sowie das Sonnenrad 4. Die Wellen der Planeten 3 sind mit einem an der Antriebswelle 8 gebildeten ringförmigen Flansch fest verbunden (vgl. Figur 12). Der Flansch dient gleichzeitig zur Abstützung des Drucklagers 9, welches zwischen dem Flansch und der Spindel 40 angeordnet ist (vgl. Figur 12).

Als Kupplung 38 zum Verblocken der Spindel 40 ist in diesem Ausführungsbeispiel eine Magnetkupplung 38 vorgesehen, wie sie beispielsweise zur Ankopplung von Klimakompressoren in Kraftfahrzeugen verwendet wird. Hierbei wird im Wesentlichen ein Schubstück 43 durch einen Magneten 44 verschoben. Die Ruhelage, d.h. die Kupplung befindet sich im geschlossenen Zustand, wird durch eine Feder 45 definiert.

Zur Betätigung der Kupplung wird die Kupplung 38 zum Verblocken der Spindel 40 gelöst. Das für den Aufbau der Anpresskraft notwendige Drehmoment wird von der Bremseinrichtung 39 gesteuert. Die Bremseinrichtung 39 bremst das Sonnenrad 4 gegenüber einem feststehenden Getriebegehäuse ab. Über das Planetengetriebe wird das Drehmoment dann über die Spindel 40 und die Gewindemutter 7 in eine axiale Kraft übersetzt, welche die Kupplung in Eingriff und außer Eingriff bringt.

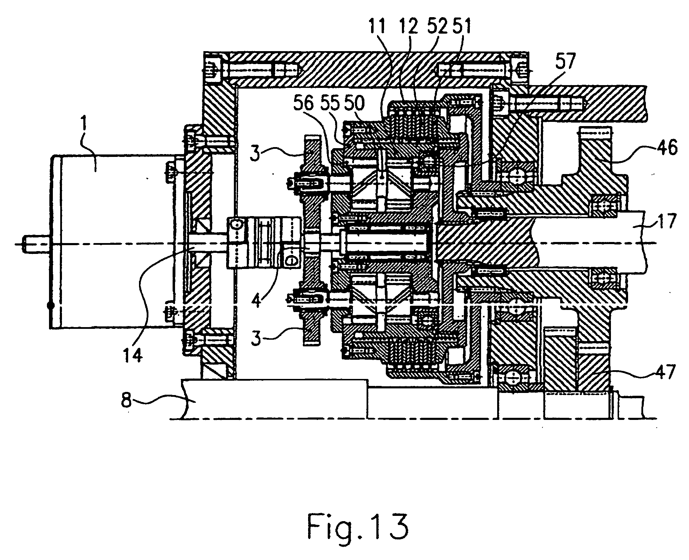

In Figur 13 ist eine Kupplung gemäß einem Ausführungsbeispiel der vorliegenden Erfindung dargestellt. Gleiche bzw. ähnliche Teile sind mit den gleichen Bezugszeichen wie in den vorangehend beschriebenen Beispiel bezeichnet.

Wie in Figur 13 gezeigt, umfasst die Kupplung eine Antriebswelle 8, einen inneren Lamellenträger 11, welcher eine Vielzahl von Lamellen 51 trägt und einen äußeren Lamellenträger 12, welcher eine Vielzahl von äußeren Lamellen 52 trägt. Der innere Lamellenträger 11 ist mit einer Abtriebswelle 17 verbunden. Der Außenlamellenträger 12 ist über ein Zahnrad 46 und ein fest mit der Welle 8 verbundenes Zahnrad 47 mit der Welle 8 verbunden.

Weiter ist ein Planetengetriebe vorgesehen, welches aus einem Sonnenrad 4 und Planeten 3 besteht. Das Planetenrad 3 ist mit einem Doppelplanetenrad 50 verbunden. Weiter ist ein Anpressring 55 vorgesehen, welcher eine Innenverzahnung 56 aufweist. Weiter weist der innere Lamellenträger 11 eine Innenverzahnung 57 auf. Ein Zahnrad des Doppelplanetenrades 50 befindet sich jeweils mit der Innenverzahnung 56 des Anpressrings 55 bzw. der Innenverzahnung 57 des Lamellenträgers 11 im Eingriff. Die Innenverzahnung des Lamellenträgers 11 unterscheidet sich von der Innenverzahnung des Anpressrings 50 durch eine unterschiedliche Zähnezahl. Die Zähnezahl des innenverzahnten Rades dividiert durch die Zähnezahldifferenz der Innenverzahnung ergibt die Übersetzung. Damit lassen sich auf einfache Weise auch größere Übersetzungen erreichen.

Weiter ist ein Elektromotor 1 vorgesehen, welcher über eine Welle 14 mit dem Sonnenrad 4 fest verbunden ist. Hierbei liegen die Achsen der Welle 14, des Sonnenrades 4, sowie der Abtriebswelle 17 auf einer gemeinsamen Achse.

Nachfolgend wird die Funktion der Kupplung beschrieben. Die sich drehende Welle 14 des Elektromotors wird durch den Elektromotor abgebremst. Dadurch verringert sich die Drehzahl des Sonnenrads 11 sowie über das Planetenrad 3 auch die Drehzahl des Doppelplanetenrads 5 durch im Vergleich zur Drehzahl der Antriebswelle. Da der Anpressring 55 über die Kupplungsverzahnung 56, 50, 57 mit dem inneren Lamellenträger 11 verbunden ist, kann der Anpressring 55 über dem Innenlamellenträger 11 nur noch eine Axialbewegung ausführen. Die durch die Zähnezahl bedingte Drehzahldifferenz wird also in eine reine Axialbewegung umgesetzt. Wie in Figur 13 gezeigt, ist das Doppelplanetenrad mit einem Winkel von 45° schräg verzahnt.

Durch das Vorschalten des Planetengetriebes vor das Doppelplanetenrad wird das Moment des Motors 1 verringert, welches für eine bestimmte Anpresskraft notwendig ist.

Somit wird das Drehmoment von der Welle 11 über das Zahnradpaar 47, 46 auf den Außenlamellenträger 12 übertragen und von dort über das Lamellenpaket 51, 52 auf den Innenlamellenträger 11 und schließlich auf die Abtriebswelle 17. Durch die Verwendung des Planetengetriebes lassen sich sehr große Übersetzungen realisieren. Hierbei ist zur Erzeugung der Anpresskraft nur ein relativ kleines Motormoment des Motors 1 notwendig. Der Verstellvorgang der Kupplung erfolgt dabei ausschließlich mit Energie aus der Antriebswelle 8, wenn der Motor als Bremse verwendet wird. Somit wird eine mechanisch kompakte Umsetzung der Drehbewegung in eine für die Kupplungen erforderliche hohe Anpresskraft erreicht. Dabei ist die benötigte Teilezahl minimal. Weiter werden die relativ großen Anpresskräfte in einem engen Kreislauf gehalten. Dadurch kann insbesondere eine kleine Baugröße der erfindungsgemäßen Kupplung erreicht werden. Weiter sind die Getriebelager weitgehend frei von Axialkräften. Ohne Nachteile können auch der Eingang und der Ausgang des Drehmoments bei der Kupplung vertauscht werden.

Die in Figur 13 gezeigte Kupplung kann bevorzugt dort eingesetzt werden, wo Kupplungen für hohe Leistungsbereiche benötigt werden, wie z.B. bei einem automatische Schaltgetriebe für Kraftfahrzeuge.

Besonders vorteilhaft kann die in Figur 13 dargestellte Kupplung bei einem zugkraftunterbrechungsfrei geschalteten Fahrzeuggetriebe einsetzen.

Zusammenfassend betrifft die vorliegende Erfindung eine Kupplung mit einem ersten Kupplungselement und einem zweiten Kupplungselement. Das erste Kupplungselement ist mit einer Antriebswelle verbunden, und das zweite Kupplungselement ist mit einer Abtriebswelle verbunden. Weiter ist eine Stelleinrichtung 1; 34; 39 vorgesehen, welche einen Sollwert für das zu übertragende Drehmoment vorgibt. Dabei wird die Rotationsenergie der Antriebswelle unmittelbar zur Betätigung, d.h. zum Einrücken und/oder Ausrücken der Kupplungsscheiben bzw. der Lamellen verwendet.

**Patentansprüche**

1. Kupplungsanordnung zur Übertragung eines Drehmoments von einer Antriebswelle (8) auf eine Abtriebswelle (17) mit einem ersten Kupplungselement (11; 18) und einem zweiten Kupplungselement (12; 19), wobei das erste Kupplungselement (17; 18) mit der Antriebswelle (8) und das zweite Kupplungselement (12; 13) mit der Abtriebswelle (17) verbunden ist, mit einer Stelleinheit (1; 34; 39) welche einen Sollwert für ein mit der Kupplung zu übertragendes Drehmoment vorgibt, und mit einer Stelleinrichtung (6; 7; 40; 27; 50), die eine Rotationsenergie der Antriebswelle (8) zum Einrücken und/oder Ausrücken der Kupplungselemente (11; 12; 18; 19) verwendet, **dadurch gekennzeichnet, dass** das Einrücken und/oder Ausrücken der Kupplungselemente (11, 12; 18; 19) mittels eines schrägverzahnten Zahnrades (50) erfolgt.

2. Kupplungsanordnung zur Übertragung eines Drehmoments nach Anspruch 1, **dadurch gekennzeichnet, dass** das Zahnrad als schrägverzahntes Doppelplanetenrad (50) ausgebildet ist.

3. Kupplungsanordnung zur Übertragung eines Drehmoments nach einem der Ansprüche 1 oder 2, **dadurch gekennzeichnet, dass** ein Planetengetriebe (2, 3, 4, 5) zwischen der Antriebswelle (8) und der Stelleinrichtung (6, 7, 40; 27; 50) angeordnet ist.

4. Kupplungsanordnung zur Übertragung eines Drehmoments nach einem der Ansprüche 1 bis 3, **dadurch gekennzeichnet, dass** ein Federelement (10) zwischen dem ersten Kupplungselement (11; 18) und der Stelleinrichtung (6, 7, 40; 27; 50) angeordnet ist.

5. Kupplungsanordnung zur Übertragung eines Drehmoments nach einem der Ansprüche 1 bis 4, **dadurch gekennzeichnet, dass** die Stelleinheit (1; 34; 39) als Bremse oder als Elektromotor ausgebildet ist.

**Claims**

1. Clutch arrangement for transmitting a torque from a drive shaft (8) to an output shaft (17) having a first clutch element (11; 18) and a second clutch element (12; 19), the first clutch element (11; 18) being connected to the drive shaft (8), and the second clutch element (12; 13) being connected to the output shaft (17), having an actuating element (1; 34; 39) which predefines a setpoint value for a torque which is to be transmitted with the clutch, and having an actuating unit (6; 7; 40; 27; 50) which uses a rotational energy of the drive shaft (8) to engage and/or disengage the clutch elements (11; 12; 18; 19), **characterized in that** the engagement and/or disengagement of the clutch elements (11; 12; 18; 19) are carried out by means of an obliquely toothed gearwheel (50).

2. Clutch arrangement for transmitting a torque according to Claim 1, **characterized in that** the gearwheel is embodied as an obliquely toothed double planetary gear (50).

3. Clutch arrangement for transmitting a torque according to one of Claims 1 or 2, **characterized in that** a planetary gear mechanism (2, 3, 4, 5) is arranged between the drive shaft (8) and the actuating device (6, 7, 40; 27; 50).

4. Clutch arrangement for transmitting a torque according to one of Claims 1 to 3, **characterized in that** a spring element (10) is arranged between the first clutch element (11; 18) and the actuating device (6, 7, 40; 27; 50).

5. Clutch arrangement for transmitting a torque according to one of Claims 1 to 4, **characterized in that** the actuating unit (1; 34; 39) is embodied as a brake or as an electric motor.

**Revendications**

1. Système d'embrayage pour transmettre un couple d'un arbre d'entrée (8) à un arbre de sortie (17), qui comporte un premier (11 ; 18) et un second (12 ; 19) élément d'embrayage, le premier élément d'embrayage (11 ; 18) étant relié à l'arbre d'entrée (8) et le second élément d'embrayage (12 ; 19) étant relié à l'arbre de sortie (17), une unité de commande (1 ; 34 ; 39) qui prédéfinit une valeur de consigne pour un couple de rotation à transmettre, et un dispositif de déplacement (6 ; 7 ; 40 ; 27 ; 50) qui utilise une énergie de rotation de l'arbre d'entrée (8) pour embrayer ou pour débrayer les éléments d'embrayage (11 ; 12 ; 18 ; 19),
   **caractérisé en ce qu'**
   un pignon (50) à denture oblique assure l'embrayage et/ou le débrayage des éléments (11 ; 12 ; 18 ; 19).

2. Système d'embrayage pour transmettre un couple selon la revendication 1,
   **caractérisé en ce que**
   le pignon denté est un planétaire double (50) à denture oblique.

3. Système d'embrayage pour transmettre un couple selon la revendication 1 ou 2,
   **caractérisé en ce qu'**
   un engrenage planétaire (2, 3, 4, 5) est monté entre l'arbre d'entrée (8) et les dispositifs de déplacement (6, 7, 40 ; 27 ; 50).

4. Système d'embrayage pour transmettre un couple selon une des revendications 1 à 3,
   **caractérisé en ce qu'**
   un élément élastique (10) est monté entre le premier élément de couplage (11 ; 18) et le dispositif de déplacement (6, 7, 40 ; 27 ; 50).

5. Système d'embrayage pour transmettre un couple selon une des revendications 1 à 4,
   **caractérisé en ce que**
   l'unité de commande (1 ; 34 ; 39) est un frein ou un moteur électrique.

Fig.1

Fig.2

Fig.3

Fig.4

Fig.5

Fig.6

Fig.7

31   32   33

Fig.8

α   α   α

31   32   33

V

Fig.9

Fig.11

Kupplungsbetätigung

Bremse ← ← Antriebswelle

Fig.10

Fig.12

Fig.13